Europäisches Patentamt

European Patent Office

Office européen des brevets

(19)

(11) Veröffentlichungsnummer : **0 191 835**
B1

(12) **EUROPÄISCHE PATENTSCHRIFT**

(45) Veröffentlichungstag der Patentschrift :
02.11.89

(21) Anmeldenummer : 85904243.4

(22) Anmeldetag : 07.08.85

(86) Internationale Anmeldenummer :
PCT/EP 85/00403

(87) Internationale Veröffentlichungsnummer :
WO/8601144 (27.02.86 Gazette 86/05)

(51) Int. Cl.⁴ : **B 29 C  37/00**, B 29 C  45/17,
**F 24 F   3/14**

(54) Einrichtung zur Erzeugung eines Trockenluftstroms.

(30) Priorität : 07.08.84 AT 2561/84
07.08.84 AT 2562/84

(43) Veröffentlichungstag der Anmeldung :
27.08.86 Patentblatt 86/35

(45) Bekanntmachung des Hinweises auf die Patenterteilung : 02.11.89 Patentblatt 89/44

(84) Benannte Vertragsstaaten :
AT BE CH DE FR GB IT LI LU NL SE

(56) Entgegenhaltungen :
DE–A– 2 600 117
GB–A– 1 349 732
US–A– 2 438 120
US–A– 2 680 355
US–A– 3 012 411
US–A– 4 482 007
Plastics Engineering, Vol. 31, No. 5, May 1975, L.B.
Ryder: "Faster cooling for blow molding", pages 18-
25
Plasteverarbeiter, Vol. 29, No. 2, February 1978,
"Echte Hilfen für den Praktiker", pages 86,87
Patent Abstracts of Japan, vol. 4, No. 111 (M-25)(593),
9 August 1980
Modern Plastics International, vol. 13, No. 9, September 1983 (Lausanne, CH), D.W. Scibor: "How mold
dehumidification can increase productivity", pages
135-146

(73) Patentinhaber : **Gottfried Amann Sohn Gesellschaft
m.b.H. & Co.
Rheinhofstrasse 3
A-6845 Hohenems (AT)**

(72) Erfinder : **AMANN, Emmo
Schweizerstrasse 10
A-6845 Hohenems (AT)**

(74) Vertreter : **Riebling, Peter, Dr.-Ing.
Patentanwalt Rennerle 10 Postfach 31 60
D-8990 Lindau/B. (DE)**

## Beschreibung

Die Erfindung betrifft eine Einrichtung zur Erzeugung eines Trockenluftstromes nach dem Oberbegriff des Patentanspruchs 1.

Bei Kunststoffspritzwerkzeugen wird in der Regel zum schnellen Erstarren der Formmasse eine ständige Kühlung durch ein Kühlmedium vorgesehen, welches die Werkzeuge durchströmt. In der Regel handelt es sich dabei um kaltwassergekühlte Spritzwerkzeuge.

Die Gesamttaktzeit einer Werkzeugmaschine mit gekühlten Werkzeugen, die beim Arbeitseinsatz erhitzt werden, ergibt sich aus einer Summe von Einzelvorgängen und deren benötigten Zeiten. Ein wesentlicher Faktor dieser Gesamttaktzeit ist die sogenannte Kühlzeit, innerhalb welcher die beim Arbeitseinsatz erhitzten Werkzeuge abgekühlt werden müssen. Gerade bei Kunststoffspritzwerkzeugen wird in der Regel zum schnellen Erstarren der Formmasse eine ständige Kühlung durch ein Kühlmedium vorgesehen, welches die Werkzeuge durchströmt. Die Werkzeugtemperatur sollte möglichst niedrig gehalten werden, um kurze Abkühlzeiten und damit kurze Taktzeiten zu erreichen. Es darf dabei nicht zu einer zu tiefen Temperatur des Kühlmediums kommen, da ansonsten ein Kondensieren der Luft an dem gekühlten Werkzeug entsteht. Infolge der beim Kondensieren der Luft entstehenden Wasserabscheidungen kommt es zu Ausschußware bei den in den Werkzeugen bzw. mit den Werkzeugen hergestellten Gegenständen.

Eine Einrichtung der genannten Art ist aus der DE-A-2 600 117 bereits bekannt. Dort ist allerdings nachteilig die Entfeuchtungsleistung nicht hoch genug ausgebildet.

Aus der GB-A-1 349 732 ist weiterhin eine Einrichtung bekannt, um ein komprimiertes Arbeitsmedium zu kühlen, wobei zur Erzielung einer hohen Entfeuchtungsleistung einem mit Kühlmedium gekühlten Vorentfeuchter ein auf Absorptionsbasis wirkender zweiter Entfeuchter nachgeschaltet ist, und dem zweiten Entfeuchter sektorförmige, gleichmäßig radialer Umfang verteilte Sektorkammern angeordnet sind, von denen jede mit einem festen Absorbent gefüllt ist, und jeweils nicht zum Entfeuchten genützte Sektoren regeneriert werden.

Hierbei ist jedoch die Entfeuchtungsleistung nicht ausreichend genug und außerdem wird nachteilig ein relativ großer Raumbedarf benötigt. Bei der bekannten Einrichtung ist außerdem ein direktes Anblasen von Werkzeugen nicht vorgesehen.

Die vorliegende Erfindung hat sich zur Aufgabe gestellt, eine Einrichtung der eingangs genannten Art so auszugestalten, daß eine hohe Entfeuchtungsleistung erzielt wird, wobei die Einrichtung im Raumbedarf klein und kostengünstig herstellbar sein soll.

Zur Lösung der Aufgabe sind die Merkmale des kennzeichnenden Teils des Patentanspruchs 1 vorgesehen.

In einer Weiterbildung der Erfindung wird vorgeschlagen, daß im Umgebungsbereich der Werkzeuge Meßeinrichtungen für die Temperatur und die relative Luftfeuchtigkeit zur Bestimmung der Taupunkttemperatur der die Werkzeuge umgebenden Luft und an der Werkzeugoberfläche eine weitere Temperaturmeßeinrichtung vorgesehen sind, wobei in Abhängigkeit von den miteinander vergleichbaren Werten der Taupunkttemperatur und der Werkzeugoberflächentemperatur eine Stellgröße für die Kühlwasservorlauftemperatur und gegebenenfalls andere zum Betrieb einer Werkzeugmaschine brauchbare Stellgrößen regelbar sind.

Hierdurch wird eine optimale Beeinflussung der Werkzeuge durch einen Trockenluftstrom erreicht, da eben dieser Trockenluftstrom bzw. ein Trockenluftschleier direkt an jenen Stellen zur Verfügung steht, wo eben die Gefahr der Kondensationsbildung gegeben ist. Durch das direkte Anblasen ist auch eine entsprechende Luftumwälzung im Bereich der Werkzeuge gewährleistet, was bei Anordnung eines klimatisierten Raumes um das Werkzeug herum nicht der Fall ist. Durch die Anwendung dieses erfindungsgemäßen Verfahrens sind Kondensationserscheinungen bei kaltwassergekühlten oder durch ein sonstiges Kühlmedium beeinflußten Spritzwerkzeugen praktisch unterbunden. Die Ausschußware kann auf ein Minimum herabgesetzt werden, da zumindest die Feuchtigkeitseinschlüsse und die unsauberen Oberflächen, die von Kondensationsbildungen an der Werkzeugoberfläche herrühren, vermieden werden können. Durch die direkte Beaufschlagung der Werkzeuge mit einem Trockenluftschleier kann auch das Kühlmedium mit einer niedrigeren Temperatur gefahren werden, so daß sich dadurch wesentlich kürzere Taktzeiten der die Werkzeuge tragenden Maschine ergeben. Dies führt zu höheren Stückzahlen und nebenbei auch zu einer höheren Qualität.

Durch diese erfindungsgemäßen Maßnahmen ist sichergestellt, daß die Oberflächentemperatur des Werkzeuges immer minimal über dem Taupunkt der Umgebungsluft im Werkzeugbereich gehalten wird. Es ist durch die Anpassung der Vorlauftemperatur des Kühlmediums stets die maximal mögliche kürzeste Kühlzeit der Werkzeuge möglich. Dadurch ist es auch möglich, die Taktzahl der Werkzeugmaschine, also die Taktzahl der entsprechenden Werkzeuge unabhängig von Jahreszeiten oder tageszeitlichen Unterschieden optimal einzustellen. Je nach Umgebungstemperatur bei den Werkzeugen und je nach der relativen Luftfeuchtigkeit, welche insbesondere durch Anblasen der Werkzeuge mit Trockenluft noch herabgesetzt werden kann, ist eine Regelung der Vorlauftemperatur des Kühlmediums und somit eine optimale Ausnutzung der Werkzeugmaschine möglich.

Zur Erzeugung eines Trockenluftschleiers sind verschiedene Ausführungsformen möglich, die alle in den Bereich der vorliegenden Erfindung fallen.

Allgemein ist das Kühlen der Luft unter die Taupunkt-Temperatur vorgesehen. Diese Kühlung erfolgt mit einem wassergekühlten Wärmetauscher oder mit einer Kältemaschine, die entweder nach dem Kompressor- oder dem Absorber-Prinzip funktioniert. Der Verdampfer ist hierbei als Wärmetauscher ausgebildet, durch den die zu entfeuchtende Luft strömt und unter die Taupunkt-Temperatur gekühlt wird.

Eine weitere Ausführungsform sieht vor, daß der zu entziehende Wasserdampf an flüssigen Absorbentien, z. B. Lithium-Chlorid, Calzium-Chlorid oder Triäthylen-Glykol gebunden wird.

Im Rahmen der vorliegenden Erfindung wird jedoch ein Binden des Wasserdampfes an ein festes Trocknungsmittel durch Absorption (z. B. Silicagel oder Melokularsiebe) bevorzugt.

Eine besonders wirksame Entfeuchtung ergibt sich dann, wenn der zu entfeuchtende Luftstrom zunächst einen Vorkühler bzw. einen Vorentfeuchter durchläuft, und danach den ein festes Absorptionsmittel enthaltenden Entfeuchter durchströmt.

Es ist dadurch eine optimale Möglichkeit zur Erzielung eines Trockenluftstromes gegeben, zumal durch die Anordnung eines Vorkühlers/Vorentfeuchters die angesaugte Frischluft bereits einer ersten Entfeuchtung unterzogen wird, wobei dann durch den auf Absorptionsbasis wirkenden zweiten Entfeuchter eine wirksame Entnahme der Restfeuchtigkeit möglich ist. Eine solche Maßnahme ist insbesondere auch deshalb von Vorteil, weil ja die Werkzeuge mit einem entsprechend großen Luftdurchsatz angeblasen werden sollen, so daß eine rasche und wirksame Entfeuchtung der Luft notwendig ist. Dies gelingt aber nur durch die erfindungsgemäß aufgebaute Einrichtung, da durch die Abkühlung der angesaugten feuchten Luft eine starke Kondensatbildung und somit eine optimale Vorentfeuchtung gegeben ist und die Absorptionsstufe die Restfeuchtigkeit abbauen kann.

Hierbei wird die Luft im Kreislauf geführt, d. h. der die Formhälften umströmende Trockenluftstrom wird im Bereich dieser Formhälften aufgefangen und wieder zur erneuten Entfeuchtung von der erfindungsgemäßen Einrichtung erneut angesaugt und entfeuchtet.

Weiterhin ist es möglich, den Vorkühler statt mit Kühlwasser mit einem Kältemittel zu betreiben oder auch zwei Vorkühler hintereinander zu schalten, bei denen der erste mit einem Kältemittel betrieben wird und der zweite mit Kühlwasser.

Hinter diese Serienschaltung der beiden Vorkühler wird dann der Entfeuchter auf Absorptionsbasis geschaltet.

Die Verwendung eines festen Absorbenten setzt voraus, daß dieser Absorbent in regelmässigen Abständen regeneriert wird, um eine gleichbleibende Entfeuchtungsleistung zu gewährleisten.

Die Regeneration des Absorbenten erfolgt über eine Beheizung des Absorptionsmittels, welches über eine elektrisch beheizte Wärmepatrone oder über eine dampfbeheizte Rohrschlange erwärmt werden kann. Hierdurch wird das vom Absorbenten absorbierte Wasser abgegeben und nach außen abgeführt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im folgenden wird die Erfindung anhand von mehreren Ausführungswege darstellenden Zeichnungen näher erläutert. Hierbei gehen aus den Zeichnungen und ihrer Beschreibung weitere Merkmale und Vorteile der in den Ansprüchen definierten Erfindung hervor.

Es zeigen :

Figur 1 eine erfindungsgemässe Einrichtung zum Aufbau eines Trockenluftschleiers, wobei die Werkzeuge schematisch dargestellt sind ;

Figur 2 ein schematisches Blockschaltbild der Einrichtung zur Erzeugung eines Trockenluftstromes ;

Figur 3 die erfindungsgemässe Einrichtung in einer Ansicht von vorne, wobei die Abdeckung weggelassen ist ;

Figur 4 eine Seitenansicht der Einrichtung ;

Figur 5 eine Ansicht von hinten dieser Einrichtung, wobei ebenfalls die Abdeckplatte weggelassen ist ;

Figur 6 eine Draufsicht auf diese Einrichtung ;

Figur 7 eine Seitenansicht von der der Figur 4 gegenüberliegenden Seite ;

Figur 8 eine schematische Darstellung von zwei Werkzeugen einer Werkzeugmaschine, wobei die gesamte Regel anordnung nur in Form von schematischen Hinweisen auf die Regelelemente aufgezeigt ist ;

Figur 9 Draufsicht auf den Ausblaskasten mit den Ausblasformstücken ;

Figur 10 schematisiert gezeichneter Schnitt in Höhe der Linie X-X in Figur 5 durch einen Entfeuchter ;

Figur 11 Draufsicht auf die Sektorblende 25 im Entfeuchter 9.

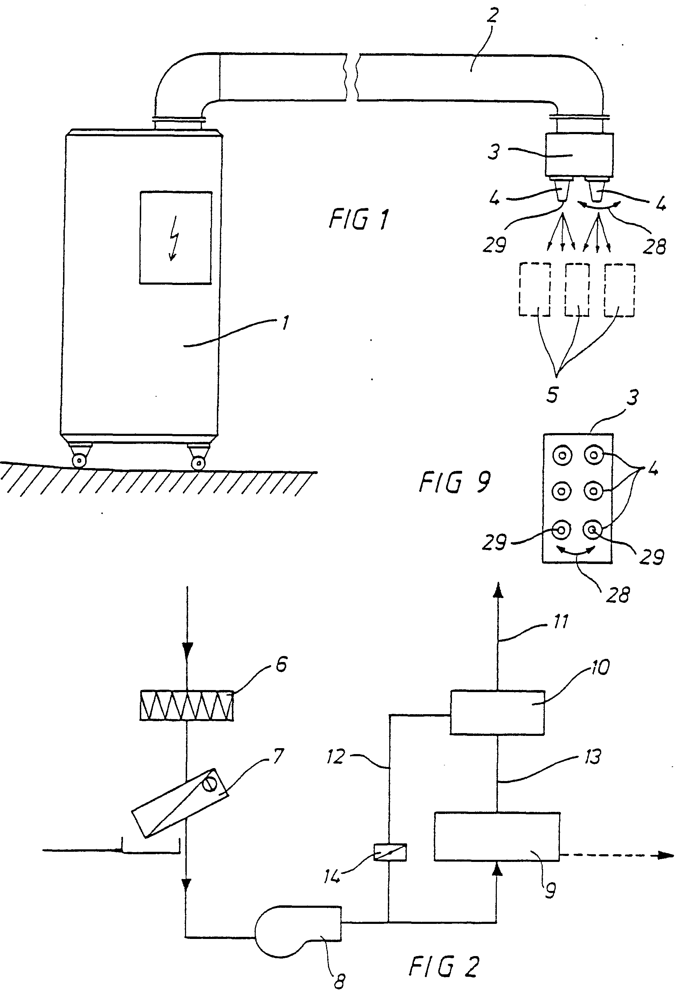

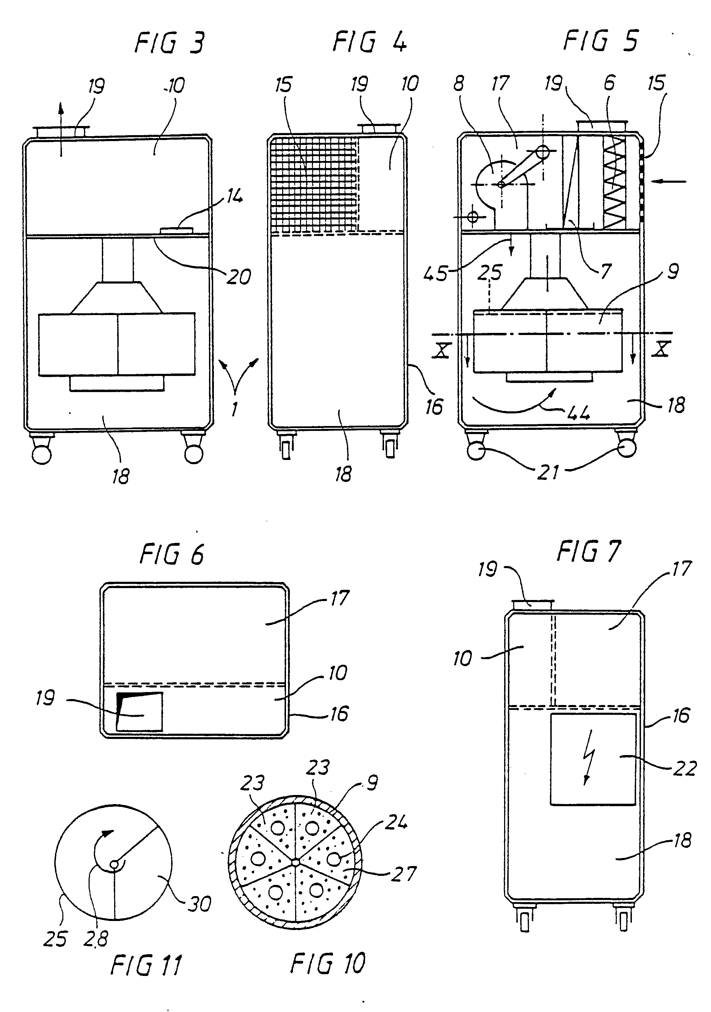

In Figur 1 ist ein schematischer Aufbau zur Erläuterung der erfindungsgemässen Einrichtung gezeigt. In einer Einrichtung 1 wird ein Trockenluftstrom erzeugt, welcher über einen Trockenluftkanal 2 in einen Ausblaskasten 3 geführt wird und von dort über Weitwurfdüsen (Ausblasformstücke 4) zu den in Figur 1 strichliert dargestellten Werkzeugen 5 gelangt. Die Werkzeuge 5 werden beim Arbeitseinsatz erhitzt. Die Werkzeugtemperatur sollte möglichst niedrig gehalten werden, um kurze Auskühlzeiten und damit kurze Taktzeiten zu erreichen. Gerade bei Kunststoffverarbeitungsmaschinen ist es wichtig, daß vor jedem neuen Arbeitstakt eine möglichst niedrige Temperatur durch entsprechendes Abkühlen wieder erreicht ist. Durch diesen Abkühlvorgang ohne die Anwendung einer Trockenluft unterschreitet die Werkzeugoberflächentemperatur sehr rasch den Taupunkt der Umgebungsluft, so daß es zur Kondensation an der Oberfläche kommt. Es muß also die Vorlauftemperatur des Kühlmediums entsprechend höher eingestellt werden, um dies zu verhindern. Dadurch benötigt man zur Wärmeabfuhr aus dem Werkzeug bzw. aus der zugeführten Kunststoffmasse mehr Zeit, d. h. die Taktzeit wird entsprechend länger.

Um eben eine solche Kondensationserscheinung zu verhindern, wird nach dem erfindungsgemässen Verfahren im Bereich der Werkzeuge 5 ein Trockenluftschleier durch direktes Anblasen der Werkzeuge 5 erzeugt. Zur Trockenluftzufuhr sind Ausblasformstücke 4 eingesetzt, welche der Werkzeugform und -größe entsprechend zur gleichmässigen Trockenluftbeaufschlagung in geeigneten Winkellagen angeordnet sind. Die Ausblasformstücke können den gegebenen Werkzeugkonstruktionen angepasst werden und z. B. in Form von Weitwurfdüsen, Ausblasschlitzen usw. ausgebildet sein.

Im gezeigten Ausführungsbeispiel sind die Ausblasformstücke 4 als Düsen 29 ausgebildet, die in den Pfeilrichtungen 28 verschwenkbar sind (vergleiche Figur 9), um eine optimale Luftverteilung über die Formhälften des Werkzeuges 5 zu erreichen.

Durch den Trockenluftstrom wird von vorneherein eine Kondensatbildung verhindert, so daß ein rasches Abkühlen der Werkzeuge 5 durch eine niedrigere Temperatur des Kühlmediums möglich wird, und demnach auch die Maschinenkapazität wesentlich erhöht werden kann.

Es ist auch eine besondere Steuerung der ganzen voneinander abhängigen Fakten möglich, indem nämlich die Taupunkttemperatur im Bereich der Werkzeuge 5 gemessen wird. Durch entsprechende Ausgangswerte dieser Messung kann die optimale Restluftfeuchtigkeit des Trockenluftstromes, gegebenenfalls die Einstellung der Ausblasformstücke 4, die Temperatur des Kühlmediums für die Werkzeuge 5 und auch die Taktzahl der die Werkzeuge 5 aufnehmenden Maschine geregelt werden. Es ist dann eine optimale Abstimmung aller für den Betrieb einer solchen Kunststoffverarbeitungsmaschine erforderlichen Fakten gegeben, so daß eine weit höhere Stückzahl von Werkstücken erreichbar ist bei noch höherer Qualität.

Die erfindungsgemässe Einrichtung zur Erzeugung des Trockenluftstromes ist vom Prinzip her der Figur 2 zu entnehmen. Über einen Filter 6 wird die feuchte Luft angesaugt und gelangt dort zu einem Vorkühler/Vorentfeuchter 7, wird dann über den Ventilator 8 weiter befördert und gelangt zum zweiten, auf Absorptionsbasis wirkenden Entfeuchter 9 und führt dann über eine Mischkammer 10 zur Trockenluftableitung 11. Der Vorkühler/Vorentfeuchter 7 ist von einem Kühlmedium durchflossen, z. B. von Kühlwasser, wobei durch die starke Abkühlung der angesaugten Luft auf einen Wert von ca. 10 °C eine starke Kondensatbildung gegeben ist und damit neben einem Abkühlen der Luft zugleich eine optimale Vorentfeuchtung erfolgen kann.

Besonders zweckmässig ist die Lage des Ventilators 8 zwischen den beiden Entfeuchtern 7 und 9, zumal der Ventilator 8 nurmehr bereits vorentfeuchtete Luft befördern muss.

Dem auf Absorptionsbasis wirkenden Entfeuchter 9 ist eine regelbare Bypassleitung 12 zugeordnet, wobei der Trockenluftausgang 13 des Entfeuchters 9 und das entsprechende Ende der Bypassleitung 12 in die gemeinsame Mischkammer 10 führen, von der dann die Trockenluftableitung 11 wegführt. In die Bypassleitung 12 ist eine Regelklappe 14 eingesetzt. Je nach Luftfeuchtigkeit der angesaugten Luft ist eine stärkere oder wenig starke Beanspruchung des zweiten Entfeuchters 9 notwendig, so daß bei entsprechender Regelung der Luftstrom ganz oder teilweise über die Bypassleitung 12 bzw. ganz oder teilweise über den Entfeuchter 9 geführt werden kann. In der Mischkammer 10 wird dann die gegebenenfalls von beiden Zuleitungen her führende Luft vermischt.

Aus den Figuren 3 bis 7 ist die Anordnung der einzelnen Elemente in der Einrichtung 1 ersichtlich. Der Lufteintritt erfolgt über ein Gitter 15 in einer Seitenwandung des Gehäuses 16, wobei der darauffolgende Filter 6, der Vorkühler/Vorentfeuchter 7 und der Ventilator 8 in einem horizontal verlaufenden Kanal 17 eingesetzt sind. Durch den Ventilator 8 wird die angesaugte Luft nach unten hin in Pfeilrichtung 45 in eine unterhalb des Kanals 17 angeordnete druckdichte Kammer 18 befördert, wobei in dieser Kammer 18 der auf Absorptionsbasis wirkende Entfeuchter 9 angeordnet ist. An der Unterseite dieses Entfeuchters 9 wird die Luft in Pfeilrichtung 44 eingeführt und gelangt nach Passieren des Entfeuchters 9 in die oberhalb der Kammer 18 und seitlich neben dem Kanal 17 angeordnete Mischkammer 10. An dieser Mischkammer 10 ist ein Anschlußstutzen 19 vorgesehen, an welchen dann der in Figur 1 dargestellte Trockenluftkanal 2 angeschlossen werden kann. Durch diese Anordnung kann auf engstem Raum eine optimale Luftentfeuchtung stattfinden, wobei der Kanal 17 sozusagen die Vorentfeuchtungsstation bildet, in der Kammer 18 die Restentfeuchtung im Entfeuchter 9 stattfindet und in der Mischkammer 10 die gewünschte Restluftfeuchtigkeit erreichbar ist. Bei einer solchen Ausbildung ist auch die Anordnung der Bypassleitung sehr einfach durchzuführen, da lediglich in der Trennwand 20 zwischen der Kammer 18 und der Mischkammer 10 eine Öffnung vorgesehen werden muß, welche durch eine regelbare Klappe 14 verschließbar ist. Die ganze Einrichtung 1 kann auf Rädern 21 verfahrbar ausgeführt werden, so daß eine relativ leichte Anpaßbarkeit auf verschiedene Gegebenheiten möglich ist.

Für den Vorkühler 7 können selbstverständlich verschiedene Konstruktionsvarianten eingesetzt werden, wobei die zweckmässigste Art darin liegt, durch eine Vorkühlung der eingesaugten Luft eine Kondensatbildung zu bewirken. Der Kühlvorgang kann durch jedes beliebige Kühlmedium erfolgen, zweckmässig wird dies durch einen Kaltwasserdurchlauf erfolgen. Die Ausbildung des auf Absorptionsbasis wirkenden Entfeuchters 9 kann ebenfalls in verschiedenen konstruktiven Varianten erfolgen, wobei das zweckmässigste Absorptionsmittel eingesetzt wird. Es kann hier beispielsweise synthetisches Material mit großer Wasseraufnahmefähigkeit eingesetzt werden, wobei durch optimale Luftführung und Luftgeschwindigkeit innerhalb dieses Entfeuchters 9 eine entsprechende Entfeuchtung der Luft erzielt wird.

Innerhalb des Gehäuses 16 der Einrichtung 1 kann auch noch die elektrische bzw. elektronische Anlage 22 eingesetzt sein, die die Steuerung der ganzen Einrichtung, insbesondere die Regelung der Luftfeuchtigkeit durch entsprechenden Einsatz der Bypassleitung bewirkt. Selbstverständlich ist diese Einrichtung 1 auch in Abhängigkeit von dem absoluten Feuchtigkeitsgehalt der Umgebungsluft steuerbar, da ja diese Umgebungsluft in die Einrichtung 1 eingesaugt und dort getrocknet werden soll. Je nach Sollwerteinstellung wird mehr oder weniger Luft über die Bypassleitung 12 in die Mischkammer 10 zugeführt.

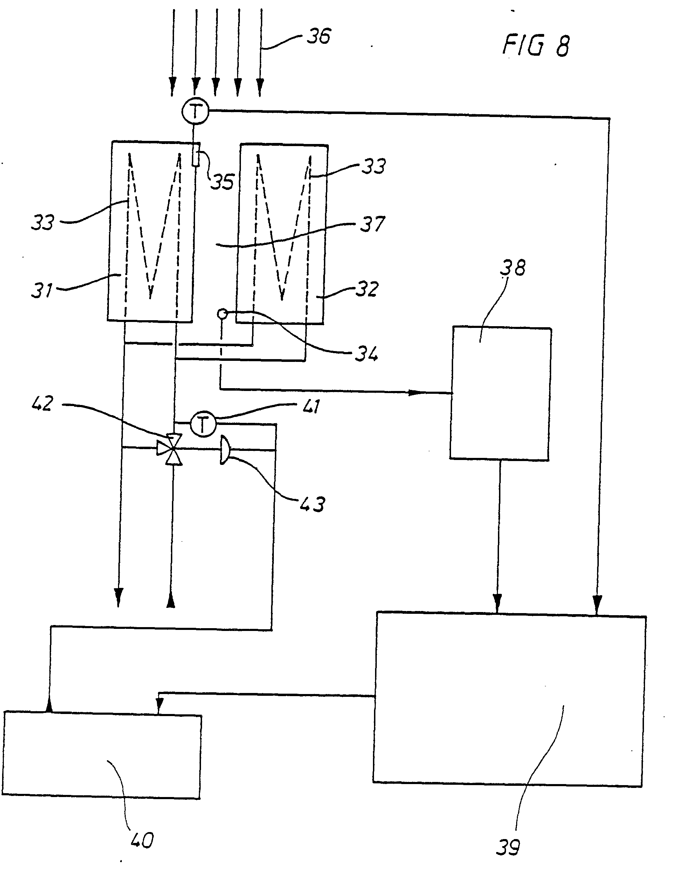

In Figur 8 sind zwei Werkzeuge 31 und 32 dargestellt, welche relativ zueinander bewegbar sind und die beiden Formhälften eines Spritzgußwerkzeuges bilden. Die Werkzeuge 1 und 2 sind in geöffneter Stellung gezeigt, bei der sie also mit geringem Abstand voneinander angeordnet sind zum Auswurf des soeben gefertigten Spritzgußartikels. In den Werkzeugen 31 und 32 sind Kanäle 33 vorgesehen, durch welche das Kühlwasser strömt.

Im Umgebungsbereich der Werkzeuge 31 und 32 sind Meßeinrichtungen 34 für die Temperatur und die relative Luftfeuchtigkeit vorgesehen, wobei durch diese Messungen die Taupunkttemperatur der die Werkzeuge umgebenden Luft bestimmt werden, kann. An den Werkzeugen 31, 32 selbst bzw. nur an einem Werkzeug 31 ist eine weitere Temperaturmeßeinrichtung 35 vorgesehen, durch welche die Temperatur der Werkzeugoberfläche gemessen werden kann.

Die Werte der Taupunkttemperatur und der Oberflächentemperatur der Werkzeuge 31, 32 können miteinander verglichen werden, wobei darauf zu achten ist, daß die Oberflächentemperatur der Werkzeuge 31, 32 immer minimal über dem Taupunkt der Umgebungsluft gehalten wird. Es wird dann auf jeden Fall ein Kondensieren der Umgebungsluft an den kaltwassergekühlten Werkzeugen 31, 32 vermieden.

Die Werkzeuge 31, 32 werden mit einem Trockenluftstrom 36 angeblasen, wobei durch einen solchen Trockenluftstrom der Trockenluftschleier um die Werkzeuge 31, 32 entsteht, durch welchen die Taupunkttemperatur weiter gesenkt werden kann, zumal die relative Luftfeuchtigkeit der die Werkzeuge 31, 32 umgebenden Luft durch diesen Trockenluftstrom 36 wesentlich verringert wird. Es ist dadurch noch eine raschere Abkühlung der Werkzeuge 31, 32 durch eine tiefere Kühlwassertemperatur möglich, ohne daß es zu einem Kondensieren der die Werkzeuge umgebenden Luft an den kaltwassergekühlten Werkzeugen 31, 32 kommen kann.

Durch die erfindungsgemässe Regelanordnung können in Abhängigkeit von den miteinander vergleichbaren Werten der Taupunkttemperatur und der Werkzeugoberflächentemperatur Stellgrößen für verschiedene Schaltungsmaßnahmen an der Spritzgußmaschine erzielt werden. So kann insbesondere eine Stellgröße für die Kühlwasservorlauftemperatur geregelt werden, wodurch erreicht wird, daß immer die optimale Abkühlzeit der Werkzeuge 31, 32 erfolgt, wobei ohne Unterschied der Jahreszeit und ohne Beeinflussung der verschiedenen Tageszeiten jeweils die optimale Abkühlzeit und somit die optimale Taktzahl der Spritzgußmaschine erreicht wird.

Wenn die Werkzeuge von einem Trockenluftstrom beaufschlagt werden, ist es zweckmässig, die Meßeinrichtungen 34 für die Taupunktmessung an der für die Umgebungsluft der Werkzeuge ungünstigsten Stelle, nämlich an der dem Trockenluftstrom entgegengesetzten Seite der Werkzeuge, anzubringen. Es ist dadurch eine unverfälschte Messung der schlechtesten Luftwerte im Werkzeugbereich gewährleistet.

Beim gezeigten Ausführungsbeispiel sind die Meßeinrichtungen 34 für die Temperatur und die relative Luftfeuchtigkeit im Umgebungsbereich der Werkzeuge 31, 32 im unteren Drittel, bezogen auf die vertikale Ausdehnung der Werkzeuge 31, 32, angeordnet. Die gemessene Temperatur im Umgebungsbereich der Werkzeuge wird dadurch auch nicht unmittelbar durch die aufsteigende Wärme im Bereich der Werkzeuge 31, 32 beeinflusst. Bei solchen Werkzeugen 31, 32, die für Spritzgußmaschinen die beiden Formhälften bilden, erweist es sich als zweckmässig, wenn diese Meßeinrichtungen 34 mit geringem Abstand von den Werkzeugen außerhalb derselben und bei zwei relativ zueinander beweglichen Werkzeugen 31, 32 im Bereich des Öffnungsspaltes 37 zwischen den Werkzeugen 1, 2 angeordnet sind. Es ist dadurch der von der Kondensation besonders gefährdete Bereich der Innenflächen der Werkzeuge erfasst, ohne daß eine direkte Temperaturbeeinflussung durch die an den Werkzeugen aufsteigende Wärme gegeben ist.

Die Temperaturmeßeinrichtung 35 an der Werkzeugoberfläche kann z. B. am oberen Abschluß der Werkzeuge 31 oder 32 angeordnet werden, weil in diesem Bereich in der Regel die größte Erwärmung der Werkzeuge 31, 32 erfolgt. Es ist zweckmässig, wenn die Temperaturmeßeinrichtung 35 möglichst nahe der Werkstückausformung an den Werkzeugen angeordnet ist.

Die Meßeinrichtung 34 für die Temperatur und die relative Luftfeuchtigkeit im Umgebungsbereich der Werkzeuge 31 und 32 sind an einen Prozessor 38 angeschlossen, in welchem ein hx-Diagramm gespeichert ist. In einem hx-Diagramm werden Temperatur und absolute Luftfeuchtigkeit einander gegenübergestellt. Durch diesen Prozessor mit dem gespeicherten hx-Diagramm ist es möglich, aus der gemessenen Temperatur und der gemessenen relativen Luftfeuchtigkeit die Taupunkttemperatur im Werkzeugbereich zu ermitteln. Von diesem Prozessor 38 werden also die entsprechenden Werte der Taupunkttemperatur an eine Regelzentrale 39 weitergeleitet. Direkt an diese Regelzentrale 39 ist die Temperaturmeßeinrichtung 35 angeschlossen. Durch eine entsprechende elektronische Steuerung, die auf bekannten Elementen beruht und daher hier nicht näher erläutert wird, werden die Taupunkttemperatur und die Werkzeugoberflächentemperatur miteinander verglichen, wobei daraus eine Stellgröße für die Vorlauftemperatur des Kühlwassers erzeugt wird, die sicherstellt, daß die Oberflächentemperatur des Werkzeuges 31, 32 immer minimal über dem Taupunkt der Umgebungsluft der Werkzeuge 31, 32 gehalten wird. Diese Stellgröße wird dann an eine Maschinenregelzentrale 40 abgegeben, von welcher aus die Vorlauftemperatur des Kühlwasssers steuerbar ist. Durch eine Meßeinrichtung 41 wird die Vorlauftemperatur des Kühlwassers ständig registriert, wobei beispielsweise zur Regelung der Vorlauftemperatur des Kühlwassers ein Dreiwegeventil 42 vorgesehen wird, welches gegebenenfalls ein Beimischen des rücklaufenden Kühlwassers ermöglicht. Es kann dann beispielsweise über einen entsprechenden Antrieb 43 dieses Dreiwegeventils von der der Regelzentrale ausgehenden Stellgröße geregelt werden. Selbstverständlich bestehen auch andere Möglichkeiten der Regelung der Vorlauftemperatur des Kühlwassers, so insbesonderin der Kühleinrichtung für das Wasser selbst. Durch die Meßeinrichtung 41 ist sichergestellt, daß die gewünschte Vorlauftemperatur des Kühlwasssers auch tatsächlich zustande kommt. Wenn jedoch die Vorlauftemperatur ungewollt ansteigen sollte, wenn also beispielsweise die Kühleinrichtung für das Kühlwasser ausfällt oder das verwendete Leitungswasser nicht die erforderliche tiefe Temperatur aufweist, kann durch entsprechende Rückkoppelung erreicht werden, daß dann selbstverständlich auch die Taktzahl der Werkzeugschließungen geändert wird, da sich dann ja automatisch eine längere Abkühlzeit für die Werkzeuge 31, 32 ergibt.

Es wird somit Indirekt durch die von der Regelzentrale 39 ausgegebene Stellgröße neben der Regelung der Vorlauftemperatur des Kühlwassers und somit der Optimierung der Abkühlzeit der Werkzeuge 31, 32 eine Regelung der Taktzeit der Spritzgußmaschine auf einen optimalen Wert erreicht.

Es kann im die von der Regelzentrale ausgegebene Stellgröße oder auch andere aus diesen Vergleichswerten des Taupunktes und der Werkzeugoberflächentemperatur erzielte Stellgrößen für verschiedene zum Betrieb einer Werkzeugmaschine, also zum Beispiel einer Spritzgußmaschine, brauchbare Stellgrößen herangezogen werden. So wäre es denkbar, daß durch solche Stellgrößen auch die Zufuhr von Trockenluft mit einer bestimmten Luftfeuchtigkeit geregelt wird und daß zum Beispiel das Öffnen und Schließen der Werkzeuge 31, 32 damit beeinflusst wird, in Abhängigkeit von einem bestimmten Abkühlungsgrad der Werkzeuge usw.

Die Stellgröße ist ein stetiges, sich in Abhängigkeit von den Vergleichswerten änderndes Signal, so daß bei einer Veränderung des Signals die entsprechenden Steuerungen erfolgen. Dieses Signal kann also zur Steuerung der Vorlauftemperatur des Kühlmediums und der Taktzahl der Werkzeugarbeitseinsätze eingesetzt werden.

Durch die erfindungsgemässe Regelanordnung ist erstmals eine Möglichkeit geschaffen worden, bei von einem Kühlmedium durchströmten Werkzeugen einen optimalen Arbeitseinsatz zu gewährleisten. Dies wirkt sich selbstverständlich besonders bei Kunststoffverarbeitungsmaschinen aus, wo bei der Einstellung der Taktzeiten um Sekunden gerungen wird. Natürlich kann sich eine erfindungsgemässe Regelanordnung in gleicher Weise auch bei anderen Werkzeugmaschinen mit von einem Kühlmedium durchströmten, beim Arbeitseinsatz erhitzten Werkzeugen bewähren.

Figur 10 zeigt schematisiert einen Schnitt durch den Entfeuchter 9, wo sichtbar ist, daß der Entfeuchter 9 als zylindrische Kammer ausgebildet ist, in der sektorförmig gleichmässig radial am Umfang verteilt Sektorkammern 23 angeordnet sind, wobei jede Sektorkammer 23 mit dem festen Absorbent 27 gefüllt ist. Zur Regenerierung enthält jede Sektorkammer 23 eine oder mehrere elektrisch heizbare Heizpatrone 24.

Die Regenerierung erfolgt über eine an der Oberseite des Entfeuchters 9 in Pfeilrichtung 28 drehbar gelagerte Sektorblende 25, welche in der Stellung in Figur 11 nur einen Naßluftstrom durch vier Sektorkammern 23 gestattet, während zwei Sektorkammern 23 durch das Sektorteil 30 abgedeckt sind. Während der Abdeckungsphase dieser beiden Sektorkammern werden die in den Sektorkammern enthaltenen Heizpatronen 24 beheizt, so daß durch die damit verbundene Erwärmung des Absorbenten 27 die darin enthaltene feuchte Luft ausgetrieben wird und außerhalb der Einrichtung 1 herausgeführt wird.

Durch den schrittweisen Antrieb der Sektorblende 25 in Pfeilrichtung 28 ist immer dafür gesorgt, daß zwei Sektorkammern vom Sektorteil 30 nach oben hin abgeschlossen sind und damit nicht vom Feuchtluftstrom durchflossen sind und während dieser Zeit regeneriert werden.

Der Vorteil der vorliegenden Erfindung liegt also darin, daß nicht mehr eine Klimatisierung der gesamten Halle erforderlich ist, in der die kunststoffverarbeitenden Maschinen enthalten sind, sondern daß lediglich die Formhälften des Werkzeuges entfeuchtet werden. Hierbei wird bis zu 1000 Kubikmeter pro Stunde feuchter Raumluft durch die Einrichtung 1 geführt. Dabei wird der Luft bis zu 9 g per kg Luft an Wasserdampf entzogen.

Bei einem Taupunkt von beispielsweise 24 °C muß die Kühlwasser-Vorlauftemperatur 21 °C für das kühlwasserdurchströmte Werkzeug betragen, um Schwitzwasserbildungen auf dem Werkzeug völlig zu vermeiden. Mit einer Einrichtung nach der vorliegenden Erfindung lassen sich jedoch Taupunkte im Formenbereich von 11 °C erzielen, was bedeutet, daß Kühlwasservorlauftemperaturen von 8 bis 9 °C eingestellt werden können. Hierdurch können die Taktzeiten des Werkzeuges um bis zu 40 % verkürzt werden.

Zeichnungs-Legende

1 Einrichtung
2 Trockenluftkanal
3 Ausblaskasten
4 Ausblasformstück
5 Werkzeug
6 Filter
7 Vorkühler/Vorentfeuchter
8 Ventilator
9 Entfeuchter
10 Mischkammer
11 Trockenluftableitung
12 Bypassleitung
13 Trockenluftausgang
14 Regelklappe
15 Gitter
16 Gehäuse
17 Kanal
18 Kammer
19 Anschlußstutzen
20 Trennwand
21 Räder
22 elektrische Anlage
23 Sektorkammer
24 Heizpatrone
25 Sektorblende
27 festes Absorbent
28 Pfeilrichtung
29 Düse
30 Sektorteil
31 Werkzeug
32 Werkzeug
33 Kanäle
34 Meßeinrichtung
35 Temperaturmeßeinrichtung
36 Trockenluftstrom
37 Öffnungsspalt
38 Prozessor
39 Regelzentrale
40 Maschinenzentrale
41 Meßeinrichtung
42 Dreiwegventil
43 Antrieb
44 Pfeilrichtung
45 Pfeilrichtung

**Patentansprüche**

1. Einrichtung zur Erzeugung eines Trockenluftstromes zur Verwendung bei im Arbeitseinsatz erhitzten und von einem Kühlmedium durchströmten Werkzeugen bei Kunststoffverarbeitungsmaschinen, wobei im Bereich der Werkzeuge (5, 31, 32) ein Trockenluftstrom durch direktes Anblasen der Werkzeuge über eine Trockenluftableitung und zugeordnete Luftdüsen erzeugt wird, und der Trockenluftstrom durch eine durch ein Kühlmedium gekühlte Kühleinrichtung derart abgekühlt wird, daß der Taupunkt des Trockenluftstromes niedriger liegt als die Temperatur, auf welche das Werkzeug abgekühlt wird, dadurch gekennzeichnet, daß zur Erzielung einer hohen Entfeuchtungsleistung dem mit Kühlmedium gekühlten Vorentfeuchter (7) ein auf Absorptionsbasis wirkender zweiter Entfeuchter (9) nachgeschaltet ist, daß im zweiten Entfeuchter (9) sektorförmige, gleichmäßige radial am Umfang verteilte Sektorkammern (23) angeordnet sind, von denen jede mit einem festen Absorbent (27) gefüllt ist, daß zur Regenerierung des Entfeuchters (9) jede Sektorkammer (23) mindestens eine elektrisch heizbare Heizpatrone (24) enthält, daß an der Einlaßseite des Entfeuchters (9) eine drehbar angetriebene Sektorblende (25) angeordnet ist, welche einen Teil der Sektorkammern (23) vom Naßluftstrom abdeckt und daß die den abgedeckten Sektorkammern (23) zugeordneten Heizpatronen (24) mit Strom versorgt sind.

2. Einrichtung nach Anspruch 1, dadurch gekennzeichnet, daß zwischen den beiden Entfeuchtern (7, 9) ein zur Luftumwälzung vorgesehener Ventilator (8) eingesetzt ist.

3. Einrichtung nach Anspruch 1, dadurch gekennzeichnet, daß eine Meßeinrichtung (34) für die Temperatur und die relative Luftfeuchtigkeit im Umgebungsbereich der Werkzeuge (31, 32) im unteren Drittel, bezogen auf die vertikale Ausdehnung der Werkzeuge (31, 32) angeordnet sind und daß die Temperaturmeßeinrichtung (35) an der Werkzeugoberfläche möglichst nahe der Werkstücksausformung an den Werkzeugen (31, 32) angeordnet ist.

4. Einrichtung nach den Ansprüchen 1 und 3, dadurch gekennzeichnet, daß die Meßeinrichtung (34) für die Temperatur und die relative Luftfeuchtigkeit im Abstand von den Werkzeugen (31, 32) und bei zwei relativ zueinander beweglichen Werkzeugen (31, 32) im Bereich des Öffnungsspaltes (37) zwischen den Werkzeugen (31, 32) angeordnet sind.

5. Einrichtung nach Anspruch 3 oder 4, dadurch gekennzeichnet, daß die Meßeinrichtung (34) für die Taupunktmessung an der dem Trockenluftstrom entgegengesetzten Seite der Werkzeuge (31, 32) angeordnet ist.

6. Einrichtung nach einem der Ansprüche 3 oder 4, dadurch gekennzeichnet, daß die Meßeinrichtungen (34) für die Temperatur und die relative Luftfeuchtigkeit im Werkzeugbereich an einen Prozessor (38) mit gespeichertem hx-Diagramm (Temperatur/absolute Luftfeuchtigkeit) angeschlossen sind, wobei dieser Prozessor (38) und die Temperaturmeßeinrichtung (35) an der Werkzeugoberfläche an eine gemeinsame Regelzentrale (39) angeschlossen sind, in welcher eine elektronische Steuerung zur Verarbeitung der zu vergleichenden Werte und zur Abgabe der Stellgröße (n) eingesetzt ist.

7. Einrichtung nach Anspruch 6, dadurch gekennzeichnet, daß die von der Meßeinrichtung (34) und dem Prozessor (38) erzeugte Stellgröße die Kühlwasservorlauftemperatur für die vom Kühlwasser durchströmten Werkzeuge (31, 32) regelt.

8. Einrichtung nach Anspruch 6, dadurch gekennzeichnet, daß die von der Meßeinrichtung (34) und dem Prozessor (38) erzeugte Stellgröße die Taktzahl der Werkzeugschließungen der Werkzeuge (31, 32) regelt.

9. Einrichtung nach Anspruch 1, dadurch gekennzeichnet, daß der von der Einrichtung erzeugte Trockenluftstrom über einen Trockenluftkanal (2) einem Ausblaskasten (3) zugeführt wird, in dem ein oder mehrere Ausblasformstücke (4) angeordnet sind.

10. Einrichtung nach Anspruch 9, dadurch gekennzeichnet, daß die Ausblasformstücke (4) als radial im Ausblaskasten (3) verstellbare Düsen (29) ausgebildet sind.

## Claims

1. A system for generating a dry airflow for use in the case of tools heated during operation and traversed by a coolant in plastics material processing machines, wherein a dry airflow is generated in the region of the tools (5, 31, 32) by direct blowing onto the tools via a dry air delivery pipe and associated air nozzles and the dry airflow is cooled by means of a cooling system cooled by a coolant, in such a way that the dewpoint of the dry airflow is lower than the temperature to which the tool is cooled, characterized in that for the purpose of securing high efficiency of dehumidification, a second dehumidifier (9) acting on the absorption principle is post-connected to the pre-dehumidifier (7) cooled with coolant, that sector chambers (23) sector shaped, uniform and radially distributed at the periphery of which each is filled with a solid absorbant are installed in the second dehumidifier (9), that each sector chamber (23) contains at least one electrically heatable heating cartridge (24) for regeneration of the dehumidifier (9), that a rotatably driven sector screen (25) is arranged on the inlet side of the dehumidifier (9), which covers a part of the sector chambers (23) against that damp airflow and that the heating cartridges (24) associated with the covered sector chambers (23) are supplied with current.

2. A system according to claim 1, characterized in that a fan (8) provided for the purpose of air circulation is interposed between the two dehumidifiers (7, 9).

3. A system according to claim 1, characterized in that a measuring system (34) for the temperature and relative air humidity in the region surrounding the tools (31, 32) is installed in the bottom third relative to the vertical extension of the tools (31, 32) and that the temperature measuring system (35) is positioned on the tool surface as close as possible to the workpiece shaping point on the tools (31, 32).

4. A system according to claims 1 and 3, characterized in that the measuring system (34) for the temperature and relative atmospheric humidity is positioned with a spacing from the tools (31, 32) and in the case of two tools (31, 32) displaceable relative to one another, is positioned in the area of the open gap (37) between the tools (31, 32).

5. A system according to claim 3 or 4, characterized in that the measuring system (34) for dewpoint measurement is arranged on the side of the tools (31, 32) opposite the dry airflow.

6. A system according to one of the claims 3 or 4, characterized in that the measuring systems (34) for the temperature and the relative atmospheric humidity in the region of the tools are connected to a processor (38) with a stored hx-graph (temperature/absolute air humidity), this processor (38) and the temperature measuring system (35) on the tool surface being connected to a common control centre (39) wherein is installed an electronic control system for processing of the values to be compared and for transmission of the reference value (n).

7. A system according to claim 6, characterized in that the reference value produced by the measuring system (34) and the processor (38) governs the initial coolant water temperature for the tools (31, 32) traversed by the coolant water.

8. A system according to claim 6, characterized in that the reference value produced by the measuring system (34) and the processor (38) governs the timing of the approach of the tools (31, 32).

9. A system according to claim 1 characterized in that the dry airflow generated by the system is fed via a dry air conduit (2) to a blow discharge box (3) wherein are installed one or more blow discharge fittings (4).

10. A system according to claim 9, characterized in that the blow discharge fittings (4) are constructed as nozzles (29) which are radially adjustable within the blow discharge box (3).

## Revendications

1. Dispositif pour produire un courant d'air sec destiné à être utilisé dans des outils chauffés en phase de travail et parcourus par un fluide de refroidissement, dans des machines de traitement des matières plastiques, et dans lequel un courant d'air sec est produit, au voisinage des outils (5, 31, 32), par soufflage direct sur les outils à l'aide d'une dérivation de l'air sec et de buses de projection d'air associées, et le courant d'air sec est refroidi par un dispositif de refroidissement réfrigéré par un fluide de refroidissement de telle façon que le point de rosée du courant d'air sec soit inférieur à la température à laquelle l'outil est refroidi, caractérisé en ce que pour l'obtention d'une déshydratation de rendement élevé se trouve disposé, en aval du déshydrateur amont (7) refroidi par le fluide de refroidissement, un second déshydrateur (9) agissant par absorption, en ce que dans le second déshydrateur (9) se trouvent disposées des chambres (23) en forme de secteurs identiques, qui sont réparties radialement sur la périphérie et dont chacune est remplie d'un agent absorbant solide (27), en ce que pour la régénération du déshydrateur (9), chaque chambre en forme de secteur (23) contient au moins une cartouche chauffante (24) pouvant être chauffée électriquement, en ce que sur le côté admission du déshydrateur (9) se trouve disposé un diaphragme en forme de secteur (25), qui est entraîné en rotation et recouvre une partie des chambres en forme de secteurs (23) vis-à-vis du courant d'air humide, et en ce que les cartouches chauffantes (24) associées aux chambres en forme de secteurs (23), recouvertes, sont alimentées en courant.

2. Dispositif selon la revendication 1, caractérisé en ce qu'un ventilateur (8) prévu pour réaliser une recirculation de l'air est inséré entre les deux déshydrateurs (7, 9).

3. Dispositif selon la revendication 1, caractérisé en ce que les dispositifs de mesure (34) de la température et de l'humidité relative de l'air sont disposés dans l'entourage des outils (31, 32) dans le tiers inférieur, vu dans la direction d'extension verticale, des outils (31, 32), et en ce que le dispositif (35) de mesure de la température est disposé sur la surface de l'outil, aussi près que possible sur les outils (31, 32) du point de formage de la pièce à traiter.

4. Dispositif selon les revendications 1 et 3, caractérisé en ce que les dispositifs de mesure (34) de la température et de l'humidité relative de l'air sont disposés à distance des outils (31, 32) et, dans le cas de deux outils (31, 32) mobiles l'un par rapport à l'autre, dans la zone de la fente d'ouverture (37) entre les outils (31, 32).

5. Dispositif selon la revendication 3 ou 4, caractérisé en ce que le dispositif de mesure (34) déterminant le point de rosée est disposé sur le côté des outils (31, 32), situé à l'opposé du courant d'air sec.

6. Dispositif selon l'une des revendications 3 ou 4, caractérisé en ce que les dispositifs de mesure (34) de la température et de l'humidité relative de l'air, situés au voisinage des outils, sont raccordés à un processeur (38) dans lequel est mémorisé un diagramme hx (température/ humidité absolue de l'air), ce processeur (38) et le dispositif (35) de mesure de la température situé sur la surface des outils, étant raccordés à une unité centrale commune de régulation (39) dans laquelle une commande électronique est incorporée pour traiter les valeurs à comparer et délivrer la grandeur de réglage (n).

7. Dispositif selon la revendication 6, caractérisé en ce que la grandeur de réglage, produite par le dispositif de mesure (34) et le processeur (38), règle la température d'arrivée de l'eau de refroidissement pour les outils (31, 32) traversés par l'eau de refroidissement.

8. Dispositif selon la revendication 6, caractérisé en ce que la grandeur de réglage produite par le dispositif de mesure (34) et le processeur (38) règle le nombre cyclique des fermetures des outils (31, 32).

9. Dispositif selon la revendication 1, caractérisé en ce que le courant d'air sec produit par le dispositif est envoyé par l'intermédiaire d'un canal (2) pour l'air sec, à un caisson de soufflage (3) dans lequel sont disposés une ou plusieurs pièces de mise en forme pour le soufflage (4).

10. Dispositif selon la revendication 9, caractérisé en ce que les pièces de mise en forme pour le soufflage (4) sont réalisées sous la forme de buses (29) pouvant être décalées radialement dans le caisson de soufflage (3).

FIG 1

2

3

4      4

29        28

5

FIG 9

3

4

29        29

28

11

10

6

12        13

7

14

9

8

FIG 2

FIG 3

FIG 4

FIG 5

FIG 6

FIG 7

FIG 11

FIG 10

FIG 8